# EUROPEAN PATENT APPLICATION

(11) **EP 4 647 188 A1**
(43) Date of publication of application: **12.11.2025**
(21) Application number: 23932158.1
(22) Date of filing: 21.12.2023
(51) Int. Cl.: B21B 37/00, B21B 1/22, B21B 3/00, G05B 13/02, G06N 3/08

(54) **COLD ROLLING CONDITION-SETTING METHOD, COLD ROLLING METHOD, COLD ROLLED STEEL SHEET MANUFACTURING METHOD, COLD ROLLING CONDITION-CALCULATING DEVICE, AND COLD ROLLING MILL**

(30) Priority: 06.04.2023 JP 2023062371
(71) Applicant: JFE Steel Corporation, Tokyo 100-0011 (JP)
(72) Inventor: FUJITA, Noriki, Tokyo 100-0011 (JP); IKOMA, Yoshiki, Tokyo 100-0011 (JP); OKA, Masashi, Tokyo 100-0011 (JP); HARADA, Yoshimitsu, Tokyo 100-0011 (JP); MATSUBARA, Yukihiro, Tokyo 100-0011 (JP)
(74) Representative: Scott, Stephen John
(86) International application number: PCT/JP2023/046014
(87) International publication number: WO 2024/209749

(57) **Abstract**

A cold rolling condition setting method is a method of setting, using a prediction model, a condition when cold rolling a steel sheet. The prediction model is a model trained using, as explanatory variables, information about each rolling target material, an annealing condition, a pickling condition, and a cold rolling condition from among past operation track records and using, as an objective variable, an asymmetric component from among rolling track records at the first rolling stand. The cold rolling condition setting method comprises: inputting an annealing condition, a pickling condition, and a set cold rolling condition at the first rolling stand for a rolling target material to be rolled to the prediction model to predict an asymmetric component at the first rolling stand; and changing the set cold rolling condition so that the predicted asymmetric component will satisfy a predetermined condition.

## Description

### TECHNICAL FIELD

The present disclosure relates to a cold rolling condition setting method, a cold rolling method, a cold-rolled steel sheet production method, a cold rolling condition calculation device, and a cold mill.

### BACKGROUND

Typically, rolling for thin cold-rolled steel sheets is performed in a state in which the sheet passing property of the steel sheet is stabilized by improving the shape (or flatness) of the steel sheet while maintaining good sheet thickness accuracy in the longitudinal and transverse directions of the steel sheet. Many of the control factors of the cold mill are automatically controlled by actuators mounted on the cold mill, and occasions for operators to set the control factors of the cold mill are decreasing.

Meanwhile, there is an increasing need for thin hard materials that are high strength yet thin gauge, with the aim of enhancing fuel efficiency by reducing weight. In cold rolling of such difficult-to-roll materials, since they contain a large amount of alloying elements, the steel sheet that has been thinned by hot rolling is annealed to improve microstructural homogeneity and reduce the load during cold rolling. Subsequently, oxide scale formed due to annealing is removed in a pickling process, and then the steel sheet is sent to a cold rolling process. During cold rolling of such difficult-to-roll materials that involve high loads and contain a large amount of alloying elements, the distribution of residual oxide scale may vary greatly in the coil longitudinal direction. Since oil adhesion to the steel sheet is hindered in parts where oxide scale remains, the friction state in the roll bite varies and consequently the rolling load (and the forward slip and torque calculated accordingly) varies. Thus, automatic control often cannot absorb variations in the correction of roll deflection such as a roll gap, a work roll bender or an intermediate roll shift of the cold mill, and roll expansion by a thermal crown. In this case, the operator sets the pass schedule and the shape control actuator so as to satisfy the equipment constraints of the cold mill without hindering productivity.

Hence, in recent years, the operation speed of cold mills and therefore productivity are increasingly dependent on operators' experiences. In view of this, Patent Literature (PTL) 1 proposes a method of learning past operation conditions using a neural network and performing mill setup using the learning results.

There is also the problem of surface roughening of the work roll as a result of the oxide scale and the work roll coming into metallic contact in the roll bite without an oil film therebetween. In view of this, PTL 2 proposes a method of subjecting a steel sheet before cold rolling to heating, bending and stretching by a tension leveler, and pickling.

### CITATION LIST

### Patent Literature

PTL 1: JP 2020-134967 A
PTL 2: JP 2020-059050 A

### SUMMARY

### (Technical Problem)

The method proposed in PTL 1 has the following problem. The method involves learning past operation conditions and performing mill setup using the learning results. However, especially in difficult-to-roll materials with a total content of Si and Al of 3.0 mass% or more, if there is variation in residual scale in the coil longitudinal direction, the shape on the mill exit side varies greatly due to the variation of the frictional coefficient. Thus, even if the operation conditions of the mill are optimal at the time of mill setup, the rolling speed may decrease due to shape defects and, in the worst case, the sheet may fracture.

With the method described in PTL 2, mechanical scale removal by a tension leveler can be expected. However, since the elongation rate cannot be changed continuously in the coil longitudinal direction, it is impossible to respond to cases where the thickness or composition of scale varies in the coil longitudinal direction, such as when only one section of the coil is subjected to low-speed operation during hot-rolled sheet annealing.

It could therefore be helpful to ensure rolling stability without impairing productivity even when cold rolling difficult-to-roll materials (steel sheets) that involve high loads and contain a large amount of additive elements.

### (Solution to Problem)

The present disclosure is based on the above. We thus provide the following.
1. A cold rolling condition setting method of setting, using a prediction model, a cold rolling condition when cold rolling a steel sheet that has a total content of Si and Al of 3.0 mass% or more and has undergone hot rolling, annealing, and pickling treatment in sequence, the prediction model being a model trained using, as explanatory variables, information about each rolling target material, an annealing condition, a pickling condition, and a cold rolling condition including work roll usage at a first rolling stand during cold rolling from among past operation track records and using, as an objective variable, an asymmetric component from among rolling track records at the first rolling stand, the cold rolling condition setting method comprising: inputting an annealing condition, a pickling condition, and a set cold rolling condition at the first rolling stand during cold rolling for a rolling target material to be rolled to the prediction model to predict an asymmetric component at the first rolling stand; and changing the set cold rolling condition so that the predicted asymmetric component will satisfy a predetermined condition.
2. A cold rolling method comprising subjecting a rolling target material to cold rolling based on a set cold rolling condition changed by the cold rolling condition setting method according to 1.
3. A cold-rolled steel sheet production method comprising: subjecting a rolling target material to hot rolling, annealing, and pickling treatment in sequence; and thereafter subjecting the rolling target material to cold rolling by the cold rolling method according to 2. to produce a cold-rolled steel sheet.
4. A cold rolling condition calculation device configured to set, using a prediction model, a cold rolling condition when cold rolling a steel sheet that has a total content of Si and Al of 3.0 mass% or more and has undergone hot rolling, annealing, and pickling treatment in sequence, the prediction model being a model trained using, as explanatory variables, information about each rolling target material, an annealing condition, a pickling condition, and a cold rolling condition including work roll usage at a first rolling stand during cold rolling from among past operation track records and using, as an objective variable, an asymmetric component from among rolling track records at the first rolling stand, the cold rolling condition calculation device comprising: a predictor configured to input an annealing condition, a pickling condition, and a set cold rolling condition at the first rolling stand during cold rolling for a rolling target material to be rolled to the prediction model to predict an asymmetric component at the first rolling stand; and a changer configured to change the set cold rolling condition so that the predicted asymmetric component will satisfy a predetermined condition.
5. A cold mill comprising the cold rolling condition calculation device according to 4.

### (Advantageous Effect)

It is thus possible to provide a cold rolling condition setting method capable of calculating cold rolling conditions that ensure rolling stability without impairing productivity even when rolling difficult-to-roll materials that involve high loads and contain a large amount of additive elements, specifically, have a total content of Si and Al of 3.0 mass% or more. Hence, difficult-to-roll materials that involve high loads and contain a large amount of additive elements can be rolled stably and productively.

### BRIEF DESCRIPTION OF THE DRAWINGS

In the accompanying drawings:
FIG. 1 is a schematic diagram illustrating the structure of a production line in one embodiment of the present disclosure;
FIG. 2 is a block diagram illustrating the structure of the arithmetic unit illustrated in FIG. 1;
FIG. 3 is a diagram illustrating the relationship between the pickling speed and the standard deviation of the differential load at the first rolling stand; and
FIG. 4 is a flowchart illustrating the processing flow of the prediction model execution section.

### DETAILED DESCRIPTION

A cold rolling method, a cold rolling condition calculation device for cold rolling, and a cold mill according to one embodiment of the present disclosure will be described below with reference to the drawings. The following embodiment is illustrative of a device or method for embodying the technical idea of the present disclosure, and is not intended to limit the materials, shapes, structures, arrangements, etc. of the components to those described below. The drawings are schematic. Therefore, the relationships and ratios between thickness and planar dimensions are different from the actual ones, and there are parts where the relationships and ratios of dimensions differ between the drawings.

### [Structure of cold mill]

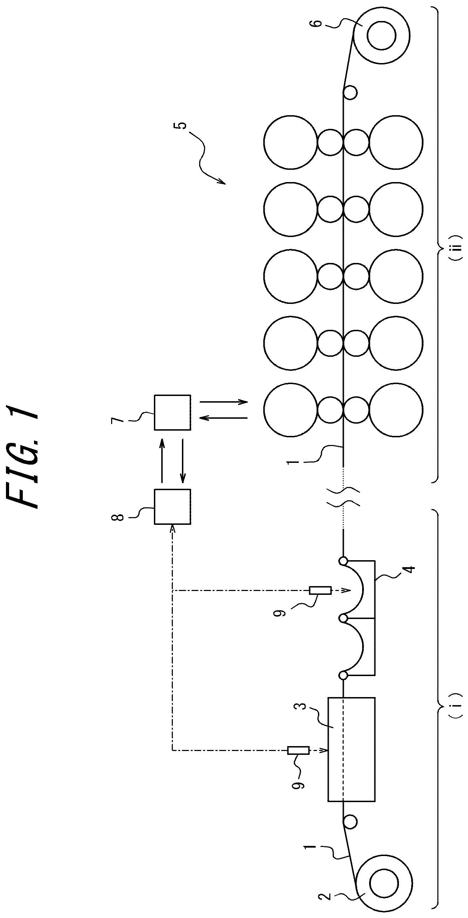

First, the structure of a production line in one embodiment of the present disclosure will be described with reference to FIG. 1. In this specification, "cold rolling" is also simply referred to as "rolling". Thus, in this specification, "cold rolling" and "rolling" are synonymous.

In the present disclosure, a steel sheet having a total content of Si and Al of 3.0 mass% or more is used as a rolled material (rolling target material) to be rolled by a cold mill. If the total content of Si and Al in the steel sheet is 3.0 mass% or more, firm oxide scale tends to form during continuous annealing. If the total content of Si and Al in the steel sheet is less than 3.0 mass%, firm oxide scale does not form and scale can be removed by pickling. If the total content of Si and Al in the steel sheet is more than 6.0 mass%, the effect of scale removal by pickling is reduced. The total content of Si and Al is therefore preferably 6.0 mass% or less.

FIG. 1 is a schematic diagram illustrating the structure of a production line in one embodiment of the present disclosure. In FIG. 1, (i) illustrates a continuous annealing line, and (ii) illustrates a cold rolling line connected to the continuous annealing line.

In the continuous annealing line of (i), reference sign 2 is a payoff reel, 3 is an annealing furnace, and 4 is a pickling tank. The annealing furnace 3 and the pickling tank 4 are equipped with conveyance rolls (not illustrated) as appropriate.

In the cold rolling line of (ii), reference sign 5 is a cold tandem mill, and 6 is a coiler. In the example illustrated in FIG. 1, the cold tandem mill 5 includes five rolling stands. Specifically, the five rolling stands are first to fifth rolling stands (#1STD to #5STD) arranged in order from the entry side (the left side of the paper in FIG. 1) to the exit side (the right side of the paper in FIG. 1). Tension rolls, deflector rolls, sheet thickness gauges, and shape gauges (not illustrated) are installed between adjacent rolling stands in the cold tandem mill 5 as appropriate. The structures of the rolling stands, the conveyance device for a steel sheet 1, and the like are not particularly limited, and known technology may be used as appropriate.

Although the continuous annealing line and the cold rolling line are connected to form one line in the embodiment illustrated in FIG. 1, the continuous annealing line and the cold rolling line may be independent lines.

In the embodiment illustrated in FIG. 1, the steel sheet 1 rolled in a hot rolling line (not illustrated) is delivered from the payoff reel 2, and then passes through the annealing furnace 3 and the pickling tank 4. Subsequently, the steel sheet 1 is cold rolled in the cold tandem mill 5, and then coiled by the coiler 6.

The annealing method in the annealing furnace 3 is not particularly limited, and a vertical furnace, a horizontal furnace, or a batch furnace may be used. The oxides formed in the annealing furnace 3 are subjected to pickling (chemical grinding) as a result of the steel sheet 1 passing through the pickling tank 4. In the pickling treatment, acid penetrates the boundary between the base metal and the surface oxides, and the surface oxides are peeled off and removed. The pickling solution used for the pickling is not particularly limited, but it is preferable to use a hydrochloric acid or sulfuric acid solution with a concentration of 5 vol% or more or a nitrohydrochloric acid solution (a solution obtained by mixing 5 vol% or more nitric acid and 0.5 vol% or more hydrochloric acid).

### [Rolling control prediction model]

Next, a rolling control prediction model in one embodiment of the present disclosure will be described.

The functions related to the rolling control prediction model in one embodiment of the present disclosure are implemented by a rolling control device 7, an arithmetic unit 8, and an operation information measurement device 9 illustrated in FIG. 1.

The rolling control device 7 controls the cold rolling conditions of the cold tandem mill 5 based on control signals from the arithmetic unit 8.

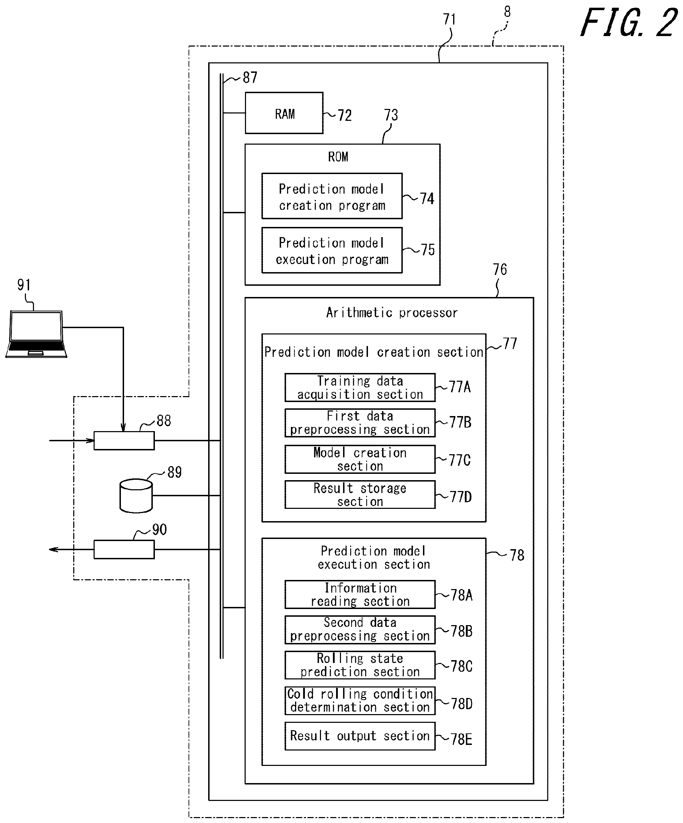

FIG. 2 is a block diagram illustrating the structure of the arithmetic unit 8 illustrated in FIG. 1. As illustrated in FIG. 2, the arithmetic unit 8 includes an arithmetic device 71, an input device 88, a storage device 89, and an output device 90.

The arithmetic device 71 is wired-connected to the input device 88, the storage device 89, and the output device 90 via a bus 87. The connection between the arithmetic device 71, the input device 88, the storage device 89, and the output device 90 is, however, not limited to such, and the arithmetic device 71, the input device 88, the storage device 89, and the output device 90 may be connected wirelessly or connected in a wired and wireless combination.

The input device 88 functions as an input port that receives rolling track records (sheet thickness, deformation resistance, rolling load, tension, roll information (roll diameter, roll material, roll roughness, and tonnage used since roll insertion (work roll usage), rolling speed, etc.) from the rolling control device 7, annealing and pickling track records (sheet thickness, temperature, gas, speed, acid track records, etc.) from the operation information measurement device 9, and information from an operation monitoring device 91. The information from the operation monitoring device 91 includes execution command information for the rolling control prediction model, information about the steel sheet 1 to be rolled (conditions in the preceding processes, steel type, and size), and cold rolling condition information (numerical, textual, and image information) set in advance by a process computer or an operator before cold rolling.

The storage device 89 is composed of, for example, a hard disk drive, a semiconductor drive, or an optical drive, and stores information necessary for the system (i.e. information required to implement the functions of the below-described prediction model creation section 77 and prediction model execution section 78).

Examples of information required to implement the functions of the prediction model creation section 77 include explanatory variables related to cold rolling, such as track records of annealing, pickling, and rolling at the first rolling stand obtained from the operation information measurement device 9, required properties of the steel sheet 1 (steel type, sheet thickness, sheet width, etc.) and mill equipment constraints, roll information of rolls used in rolling (roll diameter, roll material, roll roughness, and tonnage used since roll insertion), characteristics of coolants used in the rolling stands, and target rolling speed, and objective variables. It is particularly important that the roll information includes, as the work roll usage at the first rolling stand in cold rolling, the tonnage used since roll insertion. Depending on the rolled material and rolling tonnage, the surface of a work roll becomes rough and information of roughness in the barrel direction may remain as an asymmetric component. It is, however, difficult to measure the roughness of the work roll online given that lubricant is constantly supplied. On the other hand, roll wear progresses with the cumulative rolling load and cumulative slip speed (i.e. difference in speed between the material and the roll), and therefore the correlation with roll roughness can be indirectly evaluated using the tonnage used since roll insertion. In the present disclosure, the asymmetric component in the rolling track records at the first rolling stand is used as the objective variable. Here, the "asymmetric component" means an operation condition that is independently controlled on the operator side (OP side) and the drive side (DR side) during cold rolling, that is, a cold rolling condition that differs between the OP side and the DR side. In the following description, information about the asymmetric component is also referred to as asymmetric rolling information or asymmetric rolling data. The "OP side" means the operator side in the steel sheet transverse direction, and the "DR side" means the equipment side opposite to the OP side.

Examples of information required to implement the functions of the prediction model execution section 78 include a rolling control prediction model for each rolling state of the steel sheet 1 created by the prediction model creation section 77 and various information input to the rolling control prediction model.

The output device 90 functions as an output port that outputs control signals from the arithmetic device 71 to the rolling control device 7.

The operation monitoring device 91 includes any display such as a liquid crystal display or an organic display. The operation monitoring device 91 receives various information indicating the operation state of the cold tandem mill 5 from the rolling control device 7, and displays these information on an operation screen that allows the operator to monitor the operation state of the cold tandem mill 5.

The arithmetic device 71 includes a RAM 72, a ROM 73, and an arithmetic processor 76.

The ROM 73 stores a prediction model creation program 74 and a prediction model execution program 75.

The arithmetic processor 76 has an arithmetic processing function, and is connected to the RAM 72 and the ROM 73 via the bus 87.

The RAM 72, the ROM 73, and the arithmetic processor 76 are connected to the input device 88, the storage device 89, and the output device 90 via the bus 87.

The arithmetic processor 76 includes a prediction model creation section 77 and a prediction model execution section 78 as functional blocks.

The prediction model creation section 77 is a processing section that creates a rolling control prediction model by a machine learning approach that links past annealing, pickling, and rolling track records with rolling constraint conditions corresponding to the past rolling track records in the cold tandem mill 5. The rolling control prediction model by the machine learning approach is not limited, and may be a neural network model such as deep learning, a regression tree model such as random forest, a gradient boosting model such as XGBoost, or the like. Any other known machine learning approaches may be used.

The prediction model creation section 77 includes a training data acquisition section 77A, a first data preprocessing section 77B, a model creation section 77C, and a result storage section 77D. The prediction model creation section 77, upon receiving an instruction to create a rolling control prediction model from the operation monitoring device 91, executes the prediction model creation program 74 stored in the ROM 73 to function as the training data acquisition section 77A, the first data preprocessing section 77B, the model creation section 77C, and the result storage section 77D. The rolling control prediction model is updated each time the prediction model creation section 77 executes the prediction model creation program 74.

The training data acquisition section 77A acquires a plurality of pieces of training data as preprocessing for creating the rolling control prediction model. In acquiring the training data, information about each rolling target material and annealing conditions, pickling conditions, and rolling track record data at the first rolling stand obtained from the operation information measurement device 9 from among past rolling track record data are used as input track record data (explanatory variables), and asymmetric rolling data at the first rolling stand is used as output track record data (objective variable).

Examples of the annealing conditions include line speed, furnace temperature, gas flow rate, dew point, cooling amount, and sheet temperature. Examples of the pickling conditions include acid concentration, additive concentration, acid temperature, and line speed. Examples of the rolling track record data include entry- and exit-side sheet thicknesses, roll diameter, roll material, roll roughness, tonnage used since roll insertion, rolling reduction ratio, deformation resistance, rolling speed, rolling load, entry- and exit-side tension, and coolant flow rate in the rolling of the coil at the first rolling stand.

Examples of the asymmetric rolling data include the asymmetric rolling state at the first rolling stand based on the input track record data, such as differential rolling load, differential tension on the entry and exit sides, rolling position difference, lubricating coolant settings (flow rate difference) in upper and lower work rolls, and roll surface roughness (roughness difference between upper and lower work rolls due to the scale remaining states on the front and back sides of the steel sheet).

The training data acquisition section 77A acquires the input track record data and output track record data from the storage device 89 and creates training data. Each piece of training data consists of a pair of input track record data and output track record data. The training data is stored in the storage device 89. The training data acquisition section 77A may supply the training data to the first data preprocessing section 77B or the model creation section 77C without storing the training data in the storage device 89. Not all but part of the data included in the above-described information may be input.

If past rolling track record data is not stored in the storage device 89 (for example, in the case of cold rolling conditions or steel type conditions for which there is no past track record) of if the sample amount is small, the training data acquisition section 77A requests the operator to perform cold rolling one or more times without using the rolling control prediction model. Moreover, given that the prediction accuracy of the rolling control prediction model is higher when the number of pieces of training data stored in the storage device 89 is greater, if the number of pieces of training data is less than a preset threshold, the training data acquisition section 77A may request the operator to perform cold rolling without using the rolling control prediction model until the number of pieces of data reaches the threshold.

The first data preprocessing section 77B processes the training data acquired by the training data acquisition section 77A for the purpose of creating the rolling control prediction model. Specifically, the first data preprocessing section 77B standardizes (normalizes) the value range of the input track record data between 0 and 1 as necessary in order to load the rolling track record data included in the training data into the machine learning model. If abnormal data or unacquired data is included, the first data preprocessing section 77B performs a process of deleting or filling in the data.

The model creation section 77C creates a rolling control prediction model by machine learning using a plurality of pieces of training data acquired by the first data preprocessing section 77B. The rolling control prediction model uses explanatory variables (coil information and past annealing, pickling, and rolling track records) as input track record data and uses the asymmetric rolling state during cold rolling as output track record data.

In this embodiment, a neural network is used as the machine learning approach, and accordingly the model creation section 77C creates a neural network model as the rolling control prediction model. In detail, the model creation section 77C creates a neural network model as the rolling control prediction model that links input track record data (past annealing, pickling, and rolling track record data) and output track record data (asymmetric rolling state during cold rolling) in training data processed for creating the rolling control prediction model. The neural network model is expressed, for example, by functional expressions.

Specifically, the model creation section 77C sets hyperparameters used in the machine learning model, and conducts training using a neural network model based on the set hyperparameters. As optimization calculation of the hyperparameters, the model creation section 77C first creates neural network models by varying some of the hyperparameters in stages with respect to training data, and then selects such hyperparameters that yield the highest prediction accuracy with respect to validation data.

Non-limiting examples of the hyperparameters include typically set hyperparameters such as the number of hidden layers, the number of neurons in each hidden layer, the dropout rate in each hidden layer (i.e. the probability of blocking the transmission of neurons), the activation function in each hidden layer, and the number of outputs. The hyperparameter optimization method is not particularly limited. Examples of methods that can be used include grid search that varies parameters in stages, random search that randomly selects parameters, and search by Bayesian optimization.

Although the model creation section 77C is incorporated as part of the arithmetic device 71 in this embodiment, the present disclosure is not limited to this structure. For example, a rolling control prediction model may be created and stored in advance and read out as appropriate.

The model creation section 77C outputs final asymmetric rolling state values for cold rolling. The number of outputs is not particularly limited. Based on the output results, past operation track records (annealing conditions, pickling conditions, and rolling track records) of the steel sheet 1, and corresponding asymmetric rolling track records (differential rolling load, differential tension on the entry and exit sides, rolling position difference, lubricating coolant settings in upper and lower work rolls, roll surface roughness, etc.) at the first rolling stand of the cold tandem mill 5, learning is performed by gradually optimizing the weight coefficients in the machine learning model.

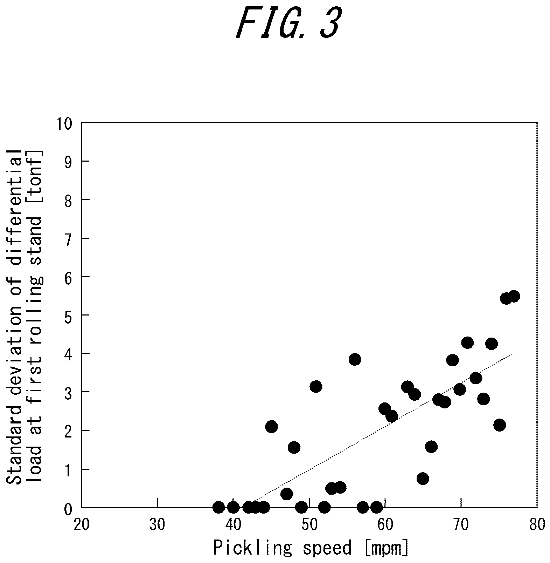

FIG. 3 is a diagram illustrating the relationship between the pickling speed (meter per minute (mpm)) and the standard deviation of the differential load at the first rolling stand (tonf). As can be seen from the drawing, for steel sheets with a total content of Si and Al of 3.0 mass% or more, the standard deviation of the differential load at the first rolling stand increases as the pickling speed increases. This is considered to be because scale formed during annealing remains without being completely removed by pickling and causes local lubrication irregularities or surface roughening of the work rolls.

After the weight coefficients of the machine learning model are trained, the model creation section 77C inputs evaluation data (operation condition track records of the steel sheet 1 to be rolled using the rolling control prediction model) into the machine learning model with the trained weight coefficients, and obtains estimation results for the evaluation data.

The result storage section 77D stores the training data, the evaluation data, the parameters of the machine learning model, the output results of the machine learning model for the training data, and the output results of the machine learning model for the evaluation data in the storage device 89.

The prediction model execution section 78 uses, during cold rolling of the steel sheet 1, the rolling control prediction model created by the prediction model creation section 77 to predict the asymmetric rolling state of the steel sheet 1 corresponding to the cold rolling conditions of the steel sheet 1 to be rolled. The prediction model execution section 78 then determines the cold rolling conditions of the steel sheet 1 to be rolled.

To perform this process, the prediction model execution section 78 includes an information reading section 78A, a second data preprocessing section 78B, a rolling state prediction section 78C, a cold rolling condition determination section 78D, and a result output section 78E. Here, when the prediction model execution section 78 receives a signal indicating that cold rolling is being performed from the rolling control device 7 via the input device 88, the prediction model execution section 78 executes the prediction model execution program 75 stored in the ROM 73 to function as the information reading section 78A, the rolling state prediction section 78C, the cold rolling condition determination section 78D, and the result output section 78E.

The information reading section 78A reads the cold rolling conditions of the steel sheet 1 to be rolled, which have been set by the process computer or operator via the operation monitoring device 91, from the storage device 89.

The second data preprocessing section 78B performs a process of creating data to be input to the rolling state prediction section 78C. The process of the second data preprocessing section 78B is the same as that of the first data preprocessing section 77B, and accordingly its detailed description will be omitted. The first data preprocessing section 77B and the second data preprocessing section 78B may be implemented as a single processing section in the form of a subroutine.

The rolling state prediction section 78C inputs the input data created by the second data preprocessing section 78B into the rolling state prediction model to predict the asymmetric rolling state of the steel sheet 1 to be rolled.

The cold rolling condition determination section 78D repeatedly changes the cold rolling conditions among the explanatory variables and returns processing to the information reading section 78A, the second data preprocessing section 78B, and the rolling state prediction section 78C until the asymmetric rolling state of the steel sheet 1 satisfies a predetermined condition. In one embodiment, the cold rolling condition determination section 78D may repeatedly change the cold rolling conditions among the explanatory variables and return processing to the information reading section 78A, the second data preprocessing section 78B, and the rolling state prediction section 78C until the asymmetric rolling state of the steel sheet 1 reaches a preset threshold or less.

The result output section 78E is activated when the asymmetric rolling state of the steel sheet 1 satisfies the predetermined condition, and outputs the determined rolling operation conditions of the steel sheet 1 to be rolled. In one embodiment, the result output section 78E is activated when the asymmetric rolling state of the steel sheet 1 reaches the preset threshold or less, and output the determined rolling operation conditions of the steel sheet 1 to be rolled.

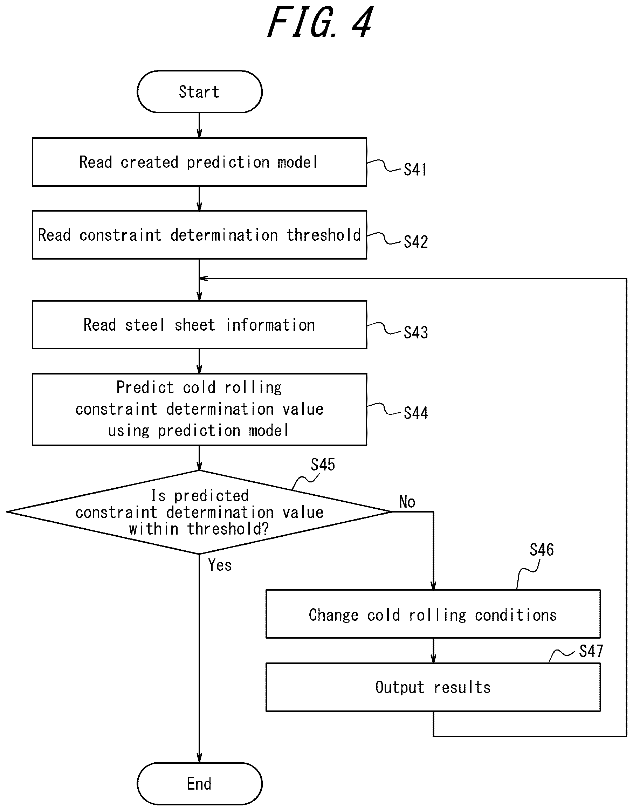

Next, the process of the prediction model execution section 78 will be described with reference to FIG. 4.

FIG. 4 is a flowchart illustrating the processing flow of the prediction model execution section 78. As illustrated in FIG. 4, when executing the rolling state prediction model, first, the information reading section 78A in the prediction model execution section 78 reads a machine learning model as the rolling state prediction model corresponding to the required characteristics of the steel sheet 1 to be rolled from the storage device 89 in step S41.

Next, in step S42, the information reading section 78A reads a determination threshold for the required asymmetric rolling state, which has been stored in the storage device 89 via the input device 88 from a host computer. Next, in step S43, the information reading section 78A reads the cold rolling conditions of the steel sheet 1 to be rolled, which have been stored in the storage device 89 via the input device 88 from the host computer.

Next, in step S44, the rolling state prediction section 78C in the prediction model execution section 78 uses the machine learning model as the rolling state prediction model read in step S41 to obtain the asymmetric rolling state value of the steel sheet 1 during cold rolling corresponding to the input track record data including the annealing, pickling, and cold rolling conditions of the steel sheet 1 to be rolled, which have been read in step S43.

Next, in step S45, the cold rolling condition determination section 78D in the prediction model execution section 78 determines whether the asymmetric rolling state value of the steel sheet 1 obtained in step S44 is within the determination threshold for the asymmetric rolling state read in step S42. If the convergence of calculation is insufficient, an upper limit may be set on the number of iterations for convergence within the range of calculation time that is actually acceptable in step S45. The asymmetric rolling state value being within the determination threshold corresponds to satisfying the predetermined condition in the present disclosure.

If the cold rolling condition determination section 78D determines that the asymmetric rolling state value is within the determination threshold (i.e. if the determination result in step S45 is Yes), the prediction model execution section 78 ends the process. If the cold rolling condition determination section 78D determines that the asymmetric rolling state value is not within the determination threshold (i.e. if the determination result in step S45 is No), the prediction model execution section 78 advances the process to step S46.

In step S46, the cold rolling condition determination section 78D changes part of the cold rolling conditions (shape control actuators, lubricating coolant flow rate, rolling speed, etc. at the first rolling stand) of the steel sheet 1 to be rolled, which have been read in step S43, and proceeds to step S47. In step S47, the result output section 78E in the prediction model execution section 78 transmits information about part of the cold rolling conditions determined, to the rolling control device 7 via the output device 90.

When part of the cold rolling conditions has been changed in step S46, in step S47, the cold rolling condition determination section 78D determines the cold rolling conditions of the steel sheet 1 to be rolled that have been partly changed in step S47, specifically, the cold rolling conditions of the steel sheet 1 to be rolled in which the manipulated variables of the bender amount and shift amount of the work rolls and intermediate rolls, the rolling position (leveling) at the rolling stand, the amount of lubricating coolant on the entry side of the rolling stand, and the rolling speed have been changed, as the optimized cold rolling conditions of the steel sheet 1. The cold rolling condition determination section 78D then determines the manipulated variable of the rolling state based on the cold rolling conditions. The rolling control device 7 changes the cold rolling conditions based on the information about the rolling state transmitted from the result output section 78E in the cold rolling stage.

As a method of calculating the amount of change in the cold rolling conditions, the cold rolling condition determination section 78D calculates appropriate cold rolling conditions of the steel sheet 1 to be rolled based on the difference between the asymmetric rolling state value obtained in step S44 and the determination threshold read in step S42. The cold rolling condition determination section 78D then compares the calculated cold rolling conditions with the cold rolling conditions of the steel sheet 1 to be rolled read in step S43, and changes the cold rolling conditions in step S47.

Returning to step S43, the rolling state prediction section 78C reads the partly changed cold rolling conditions of the steel sheet 1 to be rolled. In step S44, the rolling state prediction section 78C uses the machine learning model as the rolling state prediction model to obtain the asymmetric rolling state value of the steel sheet 1 during cold rolling corresponding to the partly changed cold rolling conditions of the steel sheet 1 to be rolled, which have been read in step S43. In step S45, the cold rolling condition determination section 78D determines whether the constraint determination value of the asymmetric rolling state obtained in step S44 is within the determination threshold read in step S42. Steps S43, S44, S45, S46, and S47 are repeatedly executed until the determination result becomes Yes. This ends the process by the prediction model execution section 78 (rolling state control determination step).

As is clear from the above description, in this embodiment, the prediction model creation section 77 creates a rolling state prediction model by a machine learning approach that links past operation track records including annealing, pickling, and rolling of the steel sheet 1 with past asymmetric rolling track records corresponding to the operation track records. The prediction model execution section 78 obtains the asymmetric rolling state value of the steel sheet 1 to be rolled using the created rolling state prediction model during cold rolling of the steel sheet 1. The prediction model execution section 78 then determines the cold rolling conditions of the steel sheet 1 to be rolled so that the obtained asymmetric rolling state value will be within a threshold. As a result, rolling control that satisfies various constraints in rolling operation can be performed without relying on operators' experiences or subjectivity, thereby maintaining productivity while preventing troubles such as shape defects and fractures during cold rolling.

### [Modifications]

While an embodiment of the present disclosure has been described above, the present disclosure is not limited to such and various modifications and improvements may be made. For example, although the repetition of rolling state prediction for the steel sheet 1 using the rolling state prediction model and the determination of cold rolling conditions are performed over the entire length of the coil in the above embodiment, such processes may be performed only for part of the length of the coil. Moreover, the cold tandem mill 5 is not limited to a four-high (4Hi) mill, and may be a multi-roll mill such as a two-high (2Hi) or six-high (6Hi) mill. The number of rolling stands is not particularly limited. A cluster mill or a Sendzimir mill may be used.

If the arithmetic unit 8 calculates an abnormal control amount that is above the upper limit or below the lower limit for changing the cold rolling conditions or if the arithmetic unit 8 cannot calculate a control amount, the rolling control device 7 cannot execute control based on a command from the arithmetic unit 8. Hence, it is preferable to suppress the operation of the rolling control device 7 if the control amount from the arithmetic unit 8 is determined to be abnormal or if no control amount is provided from the arithmetic unit 8.

Although the output device 90 and the operation monitoring device 91 are not connected in the structure example illustrated in FIG. 2, the output device 90 and the operation monitoring device 91 may be connected so as to be capable of communication with each other. This allows the processing results of the prediction model execution section 78 (in particular, the rolling state prediction information for the steel sheet 1 during rolling provided by the rolling state prediction section 78C, and the changed cold rolling conditions determined by the cold rolling condition determination section 78D) to be displayed on the operation screen of the operation monitoring device 91.

### EXAMPLES

The presently disclosed technology will be described below by way of examples.

An experiment was conducted using a cold tandem mill composed of a total of five rolling stands according to the embodiment illustrated in FIG. 1, to cold roll, as a rolled material, a blank steel sheet for electrical steel sheets containing Si and Al and having a base metal thickness of 2.0 mm and a sheet width of 1000 mm to a final thickness of 0.300 mm. An undiluted solution of rolling oil was prepared by adding, to a base oil of synthetic ester oil with added vegetable oil, 1 mass% an oiliness agent, 1 mass% an antioxidant, and a nonionic surfactant in a concentration of 3 mass% relative to the oil. The emulsion rolling oil to be recycled was prepared to have a rolling oil concentration of 3.5 mass%, an average particle size of 5 µm, and a temperature of 55 °C.

First, as pretraining, a machine learning model (gradient boosting method using LightGBM (Gradient Boosting Machine)) was trained using training data (approximately 3,000 pieces of past steel sheet annealing, pickling, and rolling track record data). Past operation track records of steel sheets and past asymmetric rolling track records of the steel sheets at the first rolling stand were linked to create a machine learning model used for predicting the rolling state of steel sheets.

In Examples, as past operation track record data of steel sheets, information consisting of annealing conditions (line speed, furnace temperature, gas flow rate, dew point, cooling amount, and sheet temperature), pickling conditions (acid concentration, additive concentration, acid temperature, and line speed), and cold rolling conditions (roll diameter, roll material, initial roll roughness, tonnage used since roll insertion, steel sheet deformation resistance, rolling load, rolling tension, emulsion properties, dimensions, crown, and roughness of work rolls, bender amount, and work roll shift amount) was used as input track record data. As past non-rolling track record data of steel sheets, determination track records of differential load, differential tension on the entry and exit sides, and rolling position difference at the first rolling stand were learned. The roll gap was adjusted in the cold tandem mill 5. When the rolling control device 7 was turned on after the welding point of the steel sheet passed, the asymmetric rolling state during cold rolling was predicted by the created machine learning model. The cold rolling conditions were then successively changed so that the predicted asymmetric rolling state would be less than or equal to a predetermined threshold. The cold rolling conditions were thus set. In the case of changing a single cold rolling condition, the cold rolling condition may be any of the entry-side coolant flow rate, rolling position difference, and rolling speed. However, in the case where the rolling position difference was changed, fracture occurred with a probability of approximately 1 %. although it is within the allowable range. It is therefore more preferable to change the entry-side coolant flow rate or the rolling speed.

In Comparative Examples, an experiment was conducted in which a blank steel sheet (rolling object) for electrical steel sheets containing Si and Al and having a base metal thickness of 2.0 mm and a sheet width of 1000 mm was cold rolled to a sheet thickness of 0.3 mm, as in Examples. In Comparative Examples, as the objective variable, rolling track records (total rolling load, total tension) without asymmetric components in the first rolling stand were linked with past operation track record data of steel sheets to create a neural network model used for predicting the rolling state.

The number of steel sheet fracture occurrences after rolling 100 coils in both Examples and Comparative Examples is shown in Table 1. As shown in Table 1, in Comparative Examples, due to insufficient learning of the asymmetric rolling state at the rolling stand, when the residual scale state fluctuated significantly along the coil length, the operation constraints were exceeded and troubles such as drawing fracture occurred.

The above revealed that it is preferable to use the cold rolling method and cold mill according to the present disclosure to appropriately predict the asymmetric rolling state during rolling of a steel sheet and determine the rolling state by successively changing the cold rolling conditions so that the predicted asymmetric rolling state value will be less than or equal to a preset threshold. It was also revealed that the use of the presently disclosed technology not only prevents product troubles such as shape defects and sheet fractures during cold rolling but also greatly contributes to improving productivity and quality in the rolling process and subsequent processes.

While the embodiments applying the present disclosure have been described above, the present disclosure is not limited to the descriptions and drawings that form part of the disclosure of these embodiments. That is, other embodiments, examples, and operational techniques conceived by those skilled in the art based on the these embodiments are all included within the scope of the present disclosure.

**Table 1**

| No. | Content (mass%) | | | Objective variable (cold rolling conditions at first rolling stand) | Explanatory variable changed (cold rolling conditions at first rolling stand) | Number of drawing fracture occurrences (per 100 coils) | Remarks |
|---|---|---|---|---|---|---|---|
| | Si | Al | Si-Al | | | | |
| 1 | 3.0 | 0.5 | 3.5 | Total rolling load | Entry-side coolant flow rate | 5 | Comparative Example |
| 2 | 3.0 | 0.5 | 3.5 | Exit-side total tension | Entry-side coolant flow rate | 3 | Comparative Example |
| 3 | 2.5 | 0.6 | 3.1 | Entry-side differential tension | Entry-side coolant flow rate | 0 | Example |
| 4 | 2.5 | 0.6 | 3.1 | Exit-side differential tension | Entry-side coolant flow rate | 0 | Example |
| 5 | 2.5 | 0.6 | 3.1 | Differential rolling load | Entry-side coolant flow rate | 0 | Example |
| 6 | 2.5 | 0.6 | 3.1 | Differential rolling load | Rolling position difference | 1 | Example |
| 7 | 2.5 | 0.6 | 3.1 | Differential rolling load | Rolling speed | 0 | Example |
| 8 | 3.0 | 0.8 | 3.8 | Differential rolling load | Entry-side coolant flow rate | 0 | Example |
| 9 | 3.2 | 0 | 3.2 | Differential rolling load | Entry-side coolant flow rate | 0 | Example |
| 10 | 2.5 | 1.2 | 3.7 | Differential rolling load | Entry-side coolant flow rate | 0 | Example |
| 11 | 3.2 | 1.2 | 4.4 | Differential rolling load | Entry-side coolant flow rate | 0 | Example |
| 12 | 3.5 | 1.5 | 5.0 | Differential rolling load | Entry-side coolant flow rate. rolling speed | 0 | Example |

### REFERENCE SIGNS LIST

- 1: steel sheet
- 2: payoff reel
- 3: annealing furnace
- 4: pickling tank
- 5: cold tandem mill
- 6: coiler
- 7: rolling control device
- 8: arithmetic unit
- 9: operation information measurement device
- 71: arithmetic device
- 74: prediction model creation program
- 75: prediction model execution program
- 76: arithmetic processor
- 77: prediction model creation section
- 77A: training data acquisition section
- 77B: first data preprocessing section
- 77C: model creation section
- 77D: result storage section
- 78: prediction model execution section
- 78A: information reading section
- 78B: second data conversion section
- 78C: rolling state prediction section
- 78D: cold rolling condition determination section
- 78E: result output section
- 88: input device
- 89: storage device
- 90: output device
- 91: operation monitoring device

## Claims

1. A cold rolling condition setting method of setting, using a prediction model, a cold rolling condition when cold rolling a steel sheet that has a total content of Si and Al of 3.0 mass% or more and has undergone hot rolling, annealing, and pickling treatment in sequence, the prediction model being a model trained using, as explanatory variables, information about each rolling target material, an annealing condition, a pickling condition, and a cold rolling condition including work roll usage at a first rolling stand during cold rolling from among past operation track records and using, as an objective variable, an asymmetric component from among rolling track records at the first rolling stand, the cold rolling condition setting method comprising:
inputting an annealing condition, a pickling condition, and a set cold rolling condition for a rolling target material to be rolled to the prediction model to predict an asymmetric component at the first rolling stand, the set cold rolling condition including work roll usage at the first rolling stand during cold rolling; and
changing the set cold rolling condition so that the predicted asymmetric component will satisfy a predetermined condition.

2. A cold rolling method comprising
subjecting a rolling target material to cold rolling based on a set cold rolling condition changed by the cold rolling condition setting method according to claim 1.

3. A cold-rolled steel sheet production method comprising:
subjecting a rolling target material to hot rolling, annealing, and pickling treatment in sequence; and
thereafter subjecting the rolling target material to cold rolling by the cold rolling method according to claim 2 to produce a cold-rolled steel sheet.

4. A cold rolling condition calculation device configured to set, using a prediction model, a cold rolling condition when cold rolling a steel sheet that has a total content of Si and Al of 3.0 mass% or more and has undergone hot rolling, annealing, and pickling treatment in sequence, the prediction model being a model trained using, as explanatory variables, information about each rolling target material, an annealing condition, a pickling condition, and a cold rolling condition including work roll usage at a first rolling stand during cold rolling from among past operation track records and using, as an objective variable, an asymmetric component from among rolling track records at the first rolling stand, the cold rolling condition calculation device comprising:
a predictor configured to input an annealing condition, a pickling condition, and a set cold rolling condition for a rolling target material to be rolled to the prediction model to predict an asymmetric component at the first rolling stand, the set cold rolling condition including work roll usage at the first rolling stand during cold rolling; and
a changer configured to change the set cold rolling condition so that the predicted asymmetric component will satisfy a predetermined condition.

5. A cold mill comprising the cold rolling condition calculation device according to claim 4.
